# EUROPEAN PATENT SPECIFICATION

(11) **EP 3 323 037 B1**
(45) Date of publication and mention of the grant of the patent: **04.12.2019**
(21) Application number: 16836650.8
(22) Date of filing: 17.08.2016
(51) Int. Cl.: G06F 3/0488, G06F 1/16, G06F 3/041

(54) **SYSTEM AND METHOD FOR DOUBLE KNUCKLE TOUCH SCREEN CONTROL**
SYSTEM UND VERFAHREN FÜR DOPPELGELENK-BERÜHRUNGSBILDSCHIRMSTEUERUNG
SYSTÈME ET PROCÉDÉ POUR LA COMMANDE D'ÉCRAN TACTILE PAR DOUBLE ARTICULATION

(30) Priority: 20.08.2015 US 201562207567 P; 12.08.2016 US 201615236312
(43) Date of publication of application: 23.05.2018
(73) Proprietor: Huawei Technologies Co., Ltd., Longgang District Shenzhen, Guangdong 518129 (CN)
(72) Inventor: PERNG, Bruce Yuh Guang, Shenzen, Guangdong 518129 (CN)
(74) Representative: Epping - Hermann - Fischer
(86) International application number: PCT/CN2016/095684
(87) International publication number: WO 2017/028786

(56) References cited:
- CN-A- 103 218 136
- CN-A- 104 657 053
- US-A1- 2007 109 279
- US-A1- 2007 262 964
- US-A1- 2011 074 544
- US-A1- 2011 141 054
- US-A1- 2014 068 441
- US-A1- 2014 210 788
- US-A1- 2014 289 659
- US-A1- 2014 289 659
- US-A1- 2014 327 626
- US-A1- 2014 327 626
- US-A1- 2015 009 175
- US-A1- 2015 035 759

## Description

### TECHNICAL FIELD

The present invention relates to a system and method for touch screen control, and, in particular embodiments, to a system and method for double knuckle touch screen control.

### BACKGROUND

An electronic device may include a touch screen that acts as a visual display and also serves as an input mechanism. A touch screen's touch-sensitive surface may use capacitive, optical, resistive, electric field, acoustic or other technologies to detect contact made on the screen. Any such contact, whether by a body part of a user or by a mechanical implement held by a user, may be referred to as a touch, a tap, or a knock. Regardless of the underlying principle of operation, touches on a touch-sensitive surface generate information signals. That is, when an object strikes a touch screen, vibrational waves may propagate through the touch screen material or along the surface of the material. Typically, a touch-sensitive surface on a touch screen uses a rigid material, such as plastic or glass, which quickly distributes and faithfully preserves such waves. Thus, when a user or a mechanical implement touches the surface of a touch screen, vibrational effects are produced in the touch screen. However, these raw signals typically are not directly useable in a digital computing environment. For example, the signals may be analog in nature. A device with a touch screen may include detection circuitry that provides an intermediate stage to process and/or condition these signals so that the signals are suitable for use in a digital computing environment.

In US 2014/0327626 A1, an electronic device is disclosed, which includes a touch-sensitive surface, for example a touch pad or touch screen. The user interacts with the touch-sensitive surface, producing touch interactions. The resulting actions taken depend at least in part on the touch type. For example, the same touch interactions performed by three different touch types of a finger pad, a finger nail and a knuckle, may result in the execution of different actions. The different touch types may be determined in part by a classification of vibro-acoustic signals from the finger touch interaction.

In US 2007/0109279 A1, a method and an apparatus are disclosed for identifying locations on a touchscreen of at least two touch events that occur within a predetermined time of one another comprising monitoring the touchscreen for touch events. Each touch event occurs at a discrete location on the touchscreen defined by an XY coordinate pair. A coordinate series is generated including at least two X coordinates and at least two Y coordinates when first and second touch events occur within a predetermined time of one another. When a release event occurs, the release event is correlated with one of the X coordinates and one of the Y coordinates in the coordinate series to form a first XY coordinate pair corresponding to the first touch event. The first XY coordinate pair associated with the first touch event is output.

### SUMMARY

A system and method according to the attached claims allow a user to use two knuckles to twice knock a user device touch screen, which provides a compelling user experience of launching any unique feature. The double-knuckle double-knock provides a short cut to launch such a unique feature in a mobile phone. Such an embodiment does not affect power consumption in the mobile phone because there is no core change to device drivers or platform code. Such an embodiment also generally does not have any latency impact. The present invention will be carried out according to the attached independent claims.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a finger sensing engine process overview;
Figure 2 illustrates a finger sensing engine software architecture;
Figure 3 illustrates vibro-acoustic spectrograms generated by various finger parts;
Figure 4 illustrates a process flow for a double-knuckle double-knock;
Figure 5 illustrates a process flow for single-knuckle and double-knuckle knocking on a touch screen device;
Figure 6 illustrates a block diagram of an embodiment method for operating a device;
Figure 7 illustrates a block diagram of an embodiment method for initiating an action on a device;
Figure 8 illustrates a block diagram of an embodiment processing system for performing methods described herein; and
Figure 9 illustrates a block diagram of a transceiver adapted to transmit and receive signaling over a telecommunications network.

### DETAILED DESCRIPTION OF ILLUSTRATIVE EMBODIMENTS

The structure, manufacture and use of the presently preferred embodiments are discussed in detail below.

Touching a touch screen on an electronic device with a finger or a mechanical implement may cause one of a number of possible actions to occur on the device. For example, touching a graphical representation on the screen of a service or application may cause the related service or application to be activated. As another example, moving a finger across the screen with a specified motion may cause a specified service or application to be activated. As yet another example, tapping anywhere on a screen, as opposed to tapping on an icon or other graphical representation, may cause a service or application to be activated. The embodiments disclosed herein are directed toward the latter case. That is, the embodiments are directed toward activating a function by tapping anywhere on a screen and not toward tapping on an icon or a specific region of a screen.

A device may respond in different manners depending on the time between two consecutive touches on the device's touch screen. If two consecutive touches occur within a pre-specified time window, the touches may be considered double touches, double taps, or double knocks. If a second touch does not occur within a pre-specified time window after a first touch, the two touches may be considered two separate single touches, single taps, or single knocks. Different applications or services may be activated depending on whether a touch event is a single touch or a double touch. Additionally or alternatively, a device may respond in different manners depending on the touch type, that is, the number of concurrent touches that are made on the device's touch screen. Finger touch types may be classified as uni-touch or multi-touch. Uni-touch is a touch by a single finger or a single mechanical implement, either momentarily or continuing over time. Examples of uni-touch include a single tap by a single finger, a touch-and-drag operation by a single finger, and a double touch, i.e., two taps in quick succession by a single finger. In multi-touch, two or more fingers touch the screen concurrently. For example, a user may tap the touch screen with two fingers simultaneously or drag two fingers across the screen simultaneously. A device may include a touch type component that can distinguish between a single finger touching the device's touch screen and multiple fingers touching the device's touch screen simultaneously. Different applications or services may be activated depending on whether a touch is a uni-touch or a multi-touch.

The application or service that is activated when a finger touches a touch screen may depend on the part of the finger that touches the touch screen. For example, a first application or service may be activated when a pad of a finger touches the touch screen, a second application or service may be activated when a tip of a finger touches the touch screen, a third application or service may be activated when a knuckle touches the touch screen, and a fourth application or service may be activated when a fingernail touches the touch screen.

The pad of a finger may be defined as the palmar aspect of a distal phalanx between the distal interphalangeal joint and the most distal portion of a finger. The tip of a finger may be defined as the most distal portion of a finger, i.e., the portion of the finger between the pad and the fingernail. The term "knuckle" may refer to the dorsal aspect of the region surrounding any of the finger joints. In the context of the embodiments disclosed herein, when an action is said to be performed by a knuckle, the action may typically be performed by the dorsal aspect of the region surrounding one of the proximal interphalangeal joints, more familiarly referred to as the middle knuckle, but it should be understood that the action may be performed by any of the knuckles. The term "finger" may also include the thumb. Any part of a finger or other object that is used to make contact with a touch screen may be referred to herein as a point of contact.

Different finger parts, such as the pad, the tip, the knuckle, and the nail, may produce different vibrational and/or acoustical effects when tapped on a touch screen. Hereinafter, any such effects will be referred to as vibro-acoustic effects or vibro-acoustic signals. As discussed in more detail below, the different vibro-acoustic effects produced by different finger parts can be distinguished from one another by sensors, thus allowing taps by different finger parts to be distinguished from one another by the different vibro-acoustic effects they produce on a touch screen.

A device with a touch screen may analyze a tap to determine the finger part that made the tap and may perform an appropriate action in accordance with the analysis. In this way, a tap may result in different actions by the device depending on the finger part that made the tap. For example, a tap by a pad, a tap by a nail, and a tap by a knuckle may trigger three different actions. If finger parts are not distinguished, then a single tap can be used for only one purpose, because a single tap by a pad, a single tap by a nail, and a single tap by a knuckle produce the same result.

This approach may also reduce the number of user inputs needed to produce a desired result on a device. That is, a tap made by a particular finger part when a device is executing a particular application may be specified to cause that application to perform a function that may otherwise require multiple steps to launch. For example, a single tap by a knuckle may cause the selection of a particular item from a particular menu in the application currently executing. If finger parts are not distinguished, then more complex motions or a deeper interface decision tree may be required. For example, when finger parts are not distinguished, the user might be required to first make a single tap to bring up a menu of several choices and then make a second tap to choose from the menu.

As further examples, a user may tap twice on the screen with a single knuckle to capture a snapshot of the full screen at any time when the device is on, or a user may draw an enclosed region on the screen with a knuckle to capture a part of the screen.

A touch detector in a device may detect the vibro-acoustic signal caused by a tap. The touch detector may be arranged, for example, at the rear side of the touch screen so that the vibro-acoustic signal caused by a touch event can be conveniently captured. The detector may alternatively be mounted in any number of other locations inside the device, including but not limited to the chassis, main board, printed circuit board, display panel, and enclosure. To capture the tap and associated vibro-acoustic signal, the touch detector may include one or more impact sensors, vibration sensors, accelerometers, strain gauges, acoustic sensors, displacement sensors, velocity sensors, proximity sensors, gyroscopes, microphones, and the like. Many touch screen computing devices have microphones and accelerometers built in (e.g., for voice and input sensing). These components may be utilized without the need for additional sensors or may work in concert with specialized sensors.

Once the vibro-acoustic signal has been captured by the touch detector, a vibro-acoustic signal classifier may process the vibro-acoustic signal to distinguish which finger part was used to make a tap. That is, since the pad, the tip, the knuckle, and the nail produce different vibro-acoustic spectrograms in a touch screen when tapped on the touch screen, a classification unit may be able to determine the finger part that made a tap by associating a received vibro-acoustic signal with a unique spectrogram known to be generated by a tap by a particular finger part. The classification unit may then use the association between the received vibro-acoustic signal and the spectrogram known to be generated by a pad, tip, knuckle, or nail to determine whether a tap was made by a pad, tip, knuckle, or nail. The device may then selectively activate a pre-specified primary function or auxiliary function depending on the classification of the vibro-acoustic signals. To aid classification, the user may provide supplemental training sample vibro-acoustic effects to the vibro-acoustic signal classifier.

In an embodiment, a device with a touch screen, responsive to detecting a double knock by two knuckles on the touch screen, initiates a pre-specified action on the device. That is, a pre-specified action is initiated when the device detects two knocks with two knuckles on its touch screen within a specified period of time. The pre-specified action initiated responsive to a double knock by two knuckles maybe, for example, the launching of a pre-specified application on the device such as a calendar, a calculator, an alarm clock, a messaging application, or a voice recorder; the execution of a pre-specified function within an application on the device such as selecting copying, cutting, or pasting text; the selection of an option on the device; the activation of a feature on the device; the display of a menu or other option selection mechanism; or the waking up of the device from an idle or sleep state.

In some cases, a double-knuckle double-knock may initiate different functions in different applications. That is, a first function or service may be specified to be activated when a first application is executing, and a second function or service may be specified to be activated when a second application is executing. In other cases, a double-knuckle double-knock may initiate the same function or service regardless of which applications are currently executing. For example, a double-knuckle double-knock may be specified to launch a screen recording feature in any application that is currently displaying information on the touch screen of a device.

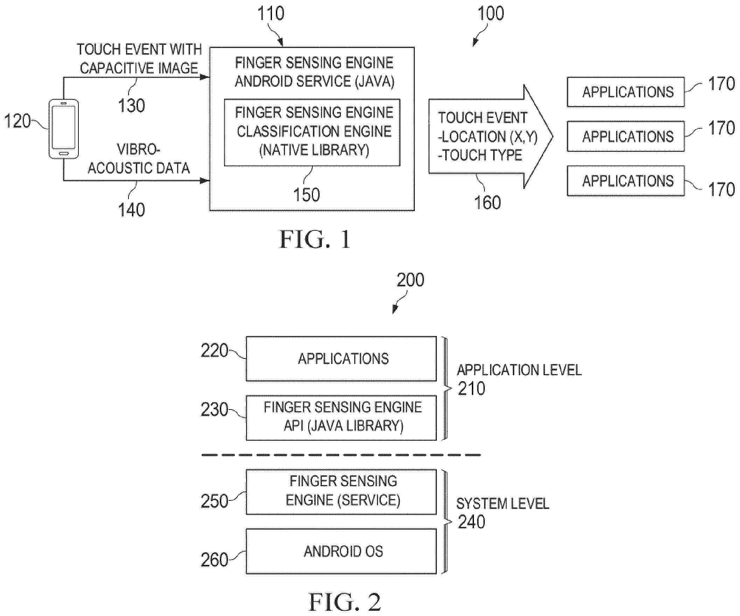

A component such as that described above that is capable of determining the part of a finger that has touched a touch screen may be referred to as a finger sensing engine. Figure 1 illustrates a process overview 100 of an embodiment finger sensing engine 110 implemented on a mobile device 120. When a touch event 130 occurs on the mobile device 120, vibro-acoustic data 140 is sent to the finger sensing engine 110. The finger sensing engine 110 may include a finger sensing classification engine 150 that is capable of classifying the vibro-acoustic data 140 in accordance with the part of a finger that touched a touch screen on the mobile device 120. In this manner, the mobile device 120 may become aware of which part of a finger has touched the touch screen. The mobile device 120 may also include a component that is capable of determining the touch type, that is, whether the touch was a uni-touch or a multi-touch. The mobile device 120 may further include a component that is capable of determining whether a touch event is a single tap or a double tap. Such components may be modules within the finger sensing engine 110 or may be separate from the finger sensing engine 110. The mobile device 120 may additionally include a processing component that is capable of determining an action to be taken responsive to determining the finger part that made the touch, the touch type, and whether the touch event was a single tap or a double tap. After determining the action to be taken, the mobile device 120 sends information 160 that causes the determined action to occur on one or more applications 170. In an embodiment, responsive to determining that the touch event 130 was a double tap by two knuckles, the mobile device causes a pre-specified one of the applications 170 to be launched, causes a pre-specified function within one of the applications 170 to be executed, or causes a pre-specified option within one of the applications 170 to be displayed or selected.

Figure 2 illustrates a software architecture 200 of an embodiment finger sensing engine implemented on a mobile device. The finger sensing engine may be substantially similar to the finger sensing engine 110 of Figure 1, and the mobile device may be substantially similar to the mobile device 120 of Figure 1. An application level 210 of the software architecture 200 may include one or more applications 220 that may be substantially similar to the applications 170 of Figure 1. The application level 210 may also include a finger sensing application programming interface (API) 230 that may have access to a Java library or a similar library. A system level 240 of the software architecture 200 may include a finger sensing engine service 250 and an operating system 260, such as the Android operating system.

A finger sensing engine may utilize a vibro-acoustic sensor as input to the engine. An accelerometer, a contact microphone, a piezo sensor, or some other type of sensor may be used to sense vibro-acoustic signals. The finger sensing engine may be compatible with both analog and digital sensors. The finger sensing engine may be able to distinguish between touches made by different input mechanisms, such as a finger pad (typical input), fingernail, knuckle, passive stylus tip, and passive stylus eraser, and can assign actions accordingly.

An embodiment allows a double-knuckle double-knock on a touch screen of a user device to enhance user experience. An embodiment processing of a double-knuckle double-knock utilizes a finger sensing engine embedded in a user device to launch a unique feature, such as a screen recording application, that is predetermined by embedded or installed device software or preselected by the user, e.g., in setup.

Allowing a user to use two knuckles to twice knock a user device touch screen provides a compelling user experience of launching any selected or unique feature. The double-knuckle double-knock provides a short cut to launch such a selected or unique feature in a user device with a touch screen, such as a mobile phone, tablet, laptop or computer. Such an embodiment does not affect power consumption in the device because there is no core change to device drivers or platform code. Such an embodiment also generally does not have any latency impact.

The finger sensing engine may utilize a pointer count function, such as that from Android's standard API, to process the number of user contacts contacting the screen at the same time or within a threshold window. Combining the pointer count function with the finger sensing engine's finger part classification, two knuckles may be considered as touching the screen simultaneously when they both contact the screen within, e.g., a 50 millisecond (ms) window, a 75 ms window, a 100 ms window, or the like.

An application, such as a screen recorder application, may be triggered when two knuckles together knock the screen twice, e.g., within a 250 ms window, a 300 ms window, a 350 ms window, or the like, for a double-knuckle double-knock. Any preloaded application on the mobile phone such as a calendar, a calculator, a phone book, etc., can be predefined to launch in response to two knuckles together knocking the screen twice within the double-knock time window.

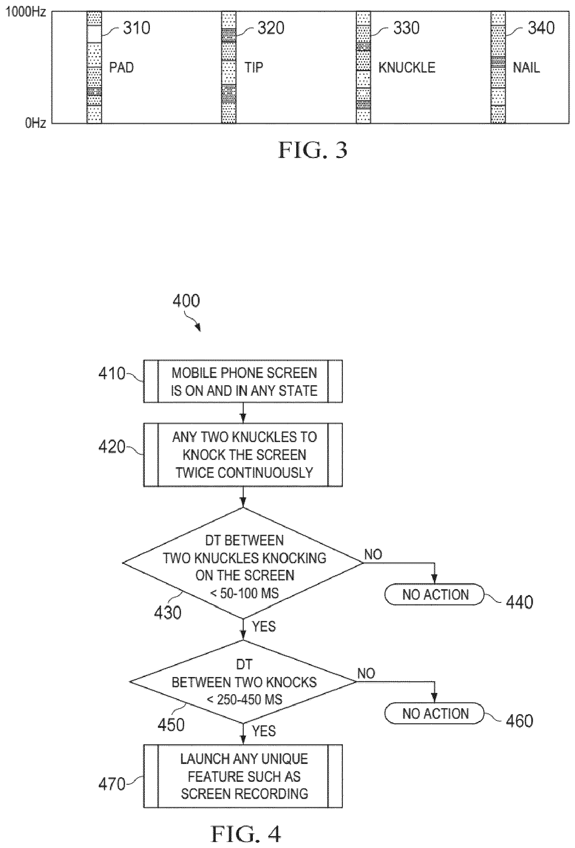

As mentioned above, contact on a touch screen by different fingers parts produces different vibro-acoustic effects in the touch screen. Figure 3 illustrates idealized depictions of vibro-acoustic spectrograms produced by different finger parts. Each different density of shading in the figure is intended to depict a different amplitude of vibrational and/or acoustical energy. A first vibro-acoustic spectrogram 310 is generated in a touch screen by a finger pad, a second vibro-acoustic spectrogram 320 is generated in a touch screen by a finger tip, a third vibro-acoustic spectrogram 330 is generated in a touch screen by a knuckle, and a fourth vibro-acoustic spectrogram 340 is generated in a touch screen by a finger nail. It can be seen that each type of touch produces vibro-acoustic effects with different amplitudes at different frequencies. One or more such spectrograms may be used to generate a profile unique to the vibro-acoustic effects produced by a particular part of a finger. That is, the profile captures characteristics that allow the vibro-acoustic effects created by different finger parts to be distinguished from one another.

In an embodiment, a plurality of such profiles may be stored in an electronic device. When the device detects a tap on its touch screen, the device compares the vibro-acoustic effects created by the tap to the stored profiles. When the device determines that vibro-acoustic effects of the tap match one of the vibro-acoustic effects profiles stored in the device, the device determines that the tap was produced by the finger part associated with that profile. The device then initiates a pre-specified action as described herein. In particular, when the device detects that a touch event was caused by knuckles and further determines that the touch event was a double tap by two knuckles, the device initiates a pre-specified action.

In some cases, the profiles may be generated automatically by a data mining algorithm or a similar component. That is, a large data set may be generated that includes frequencies, amplitudes, and other data associated with vibro-acoustic effects produced on different touch screens by a large number of people using different finger parts. The data set may then be fed into the data mining algorithm for analysis. The data mining algorithm may determine characteristics that are unique to the vibro-acoustic effects produced by each of the different finger parts and then classify the vibro-acoustic effects according to the finger parts that produced the effects. A profile unique to each finger part may thus be produced. A plurality of such profiles may be stored in an electronic device for comparison to taps made on a touch screen of the device.

In other cases, the profiles may be generated by training samples entered into an electronic device. That is, a user of a device may tap on the device's touch screen with different finger parts and inform the device which finger parts produced which taps. The device may capture data associated with the vibro-acoustic effects produced by the different finger parts and associate the data with the finger part information entered by the user. In this way, the device may learn the unique the vibro-acoustic effects generated by the different finger parts of that particular user. Data associated with these unique effects may then be stored in the device as profiles for the different finger parts.

In yet other cases, a combination of the above techniques may be used. That is, a set of profiles generated by a data mining algorithm may be stored in a device, and the profiles may be refined by training samples entered into the device by the device's user.

Figure 4 illustrates an embodiment process flow 400 for a double-knuckle double-knock input into a touch screen on an electronic device. At block 410, the touch screen of a mobile phone or similar device is on and in any state. At block 420, any two knuckles knock the screen twice. A finger sensing engine in the device may determine that the knocks were made by knuckles rather than by some other finger part or by a mechanical implement. It may be assumed that, at this point, the device has not yet determined whether the knocks were two single knocks or one double knock or whether the knocks were uni-touch or multi-touch. As mentioned above, the knocks may be made anywhere on the touch screen and are not limited to being made on an icon or a particular region of the touch screen. That is, the decision steps in the process flow 400 ignore the positions of the knocks on the touch screen and are dependent only on the detection of the knocks on the touch screen.

At block 430, a determination is made whether the knocks were uni-touch or multi-touch. This determination may be made by detecting whether a time between knocks was below a first threshold, referred to in block 430 as DT or delta time. In this embodiment, the first threshold is 50 - 100 ms, but in other embodiments other thresholds could be used. That is, the distinction between a uni-touch and a multi-touch is made by measuring a time between two touches on a touch screen. If the time is below the first threshold, that is, if the time is within a pre-specified time window such as 50 ms, 75, ms or 100 ms, the two touches maybe considered to have occurred substantially simultaneously and are therefore considered a multi-touch. If the time is not below the first threshold, the two touches are considered two uni-touches. Such a distinction may be made since it may be assumed that, for all practical purposes, it is impossible for two knuckles to touch a touch screen at precisely the same instant. That is, it may be assumed that when a user performs a knock with two knuckles, there will always be some delay of any arbitrarily small length between the time the first knuckle touches the screen and the time the second knuckle touches the screen. A component in the electronic device may be capable of measuring the time between touches with the precision necessary to detect any delay between two touches no matter how small the delay may be. Thus, in an embodiment, the distinction between a uni-touch and a multi-touch is made in accordance with a time threshold between touches on a touch screen rather than by determining that a distance between touches on a touch screen is greater than a distance threshold. Any two or more touches that occur below such a time threshold may be considered concurrent or simultaneous.

At block 440, it has been determined that the time between the knuckle knocks was not below the first threshold, and therefore the knuckle knocks are considered multiple uni-touch knocks. Therefore, no action is taken at block 440. If at block 430, it is determined that the time between the knocks was below the first threshold, the knocks are considered multi-touch, and the process flow 400 moves to block 450.

At block 450, a determination is made whether the time between a first multi-touch knock and a second multi-touch knock is below a second threshold. This second threshold is referred to in block 450 as DT, but it should be understood that the DT in block 450 is different from the DT in block 430. In this embodiment, the second threshold is 250 - 350 ms, but in other embodiments other thresholds could be used. If the time between two consecutive multi-touch knocks is below the second threshold, the multi-touch knocks may be considered a double multi-touch knock. If the time between two consecutive multi-touch knocks is not below the second threshold, the multi-touch knocks may be considered two separate single multi-touch knocks. That is, if too much time passes between knocks, the knocks are considered separate single knocks rather than a double knock. At block 460, it has been determined that the time between the two multi-touch knocks was not below the second threshold, and therefore the knocks are considered two separate single multi-touch knocks. Therefore, no action is taken at block 460. If, at block 450, it is determined that the time between the two multi-touch knocks was below the second threshold, the knocks are considered a double multi-touch knock, and the process flow 400 moves to block 470. At block 470, any unique feature, such as screen recording, is launched. That is, since the previous steps have established that a double multi-touch knuckle knock input has occurred, a pre-specified action associated with a double multi-touch knuckle knock input is executed.

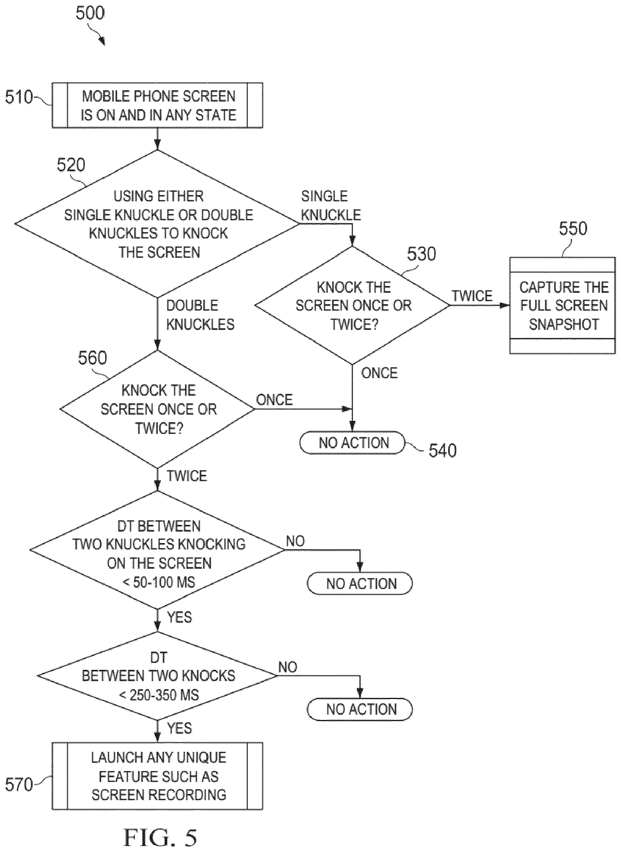

Figure 5 illustrates an alternative process flow 500 for single-knuckle and double-knuckle knocking on a touch screen device. At block 510, the touch screen of a mobile phone or similar device is on and in any state. At block 520, a determination is made whether a single knuckle or a double knuckle was used to knock on a touch screen on the device. If a single knuckle was used to knock on the touch screen, the process flow 500 moves to block 530. At block 530, a determination is made whether the screen was knocked on once or twice. If the screen was knocked on once, the process flow 500 moves to block 540, and no action is taken. If, at block 530, the screen was knocked on twice, the process flow 500 moves to block 550. At block 550, a snapshot of the full screen is captured. In other embodiments, other actions may occur at block 550, where it has been determined that a knock by a single knuckle has occurred twice. If, at block 520, it is determined that double knuckles were used to knock on the touch screen, the process flow 500 moves to block 560. At block 560, a determination is made whether the screen was knocked on once or twice. If the screen was knocked on once, the process flow 500 moves to block 540, and no action is taken. If, at block 560, the screen was knocked on twice, the process flow 500 moves to block 570. That is, the process flow 500 moves to block 570 when it is determined that a double-knuckle double-knock has occurred. As described above, any feature on the device may then be activated responsive to detection of the double-knuckle double-knock. Again, the knocks may be made anywhere on the touch screen, and the decision steps in the process flow 500 ignore the positions of the knocks on the touch screen.

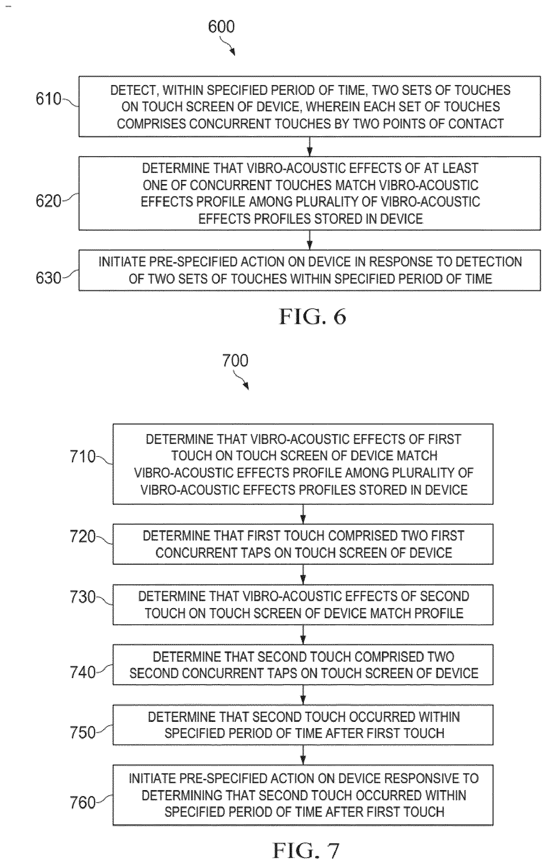

Figure 6 illustrates a block diagram of an embodiment method 600 for operating a device. At block 610, the device detects, within a specified period of time, two sets of touches on a touch screen of the device, wherein each set of touches comprises concurrent touches by two points of contact. The specified period of time maybe 250 ms, 300 ms, 350 ms, or some other appropriate period of time. At block 620, the device determines that vibro-acoustic effects of at least one of the concurrent touches match a vibro-acoustic effects profile among a plurality of vibro-acoustic effects profiles stored in the device. At block 630, the device initiates a pre-specified action on the device in response to the detection of the two sets of touches within the specified period of time.

The detection step of the method 600 may be performed by a detection unit or module, the determination step may be performed by a determination unit or module, and the initiation step may be performed by an initiation unit or module. These units or modules may be separate units or modules within the device, or the functions of two or more such units or modules may be combined into a single unit or module within the device. For instance, one or more of the units or modules may be an integrated circuit, such as a field programmable gate array (FPGA) or an application-specific integrated circuit (ASIC).

Figure 7 illustrates a block diagram of an embodiment method 700 for initiating an action on a device. At block 710, the device determines that vibro-acoustic effects of a first touch on a touch screen of the device match a vibro-acoustic effects profile among a plurality of vibro-acoustic effects profiles stored in the device. At block 720, the device determines that the first touch comprised two first concurrent taps on the touch screen of the device. At block 730, the device determines that vibro-acoustic effects of a second touch on the touch screen of the device match the profile. At block 740, the device determines that the second touch comprised two second concurrent taps on the touch screen of the device. At block 750, the device determines that the second touch occurred within a specified period of time after the first touch. At block 760, the device initiates a pre-specified action on the device responsive to determining that the second touch occurred within the specified period of time after the first touch.

The determination steps of the method 700 may be performed by one or more determination units or modules, and the initiation step may be performed by an initiation unit or module. These units or modules may be separate units or modules within the device, or the functions of two or more such units or modules may be combined into a single unit or module within the device. For instance, one or more of the units or modules may be an integrated circuit, such as an FPGA or an ASIC.

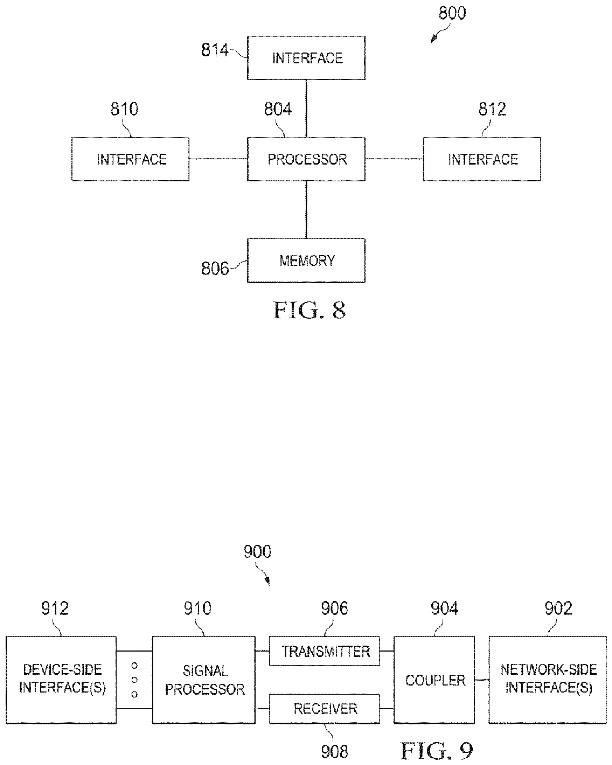

Figure 8 illustrates a block diagram of an embodiment processing system 800 for performing methods described herein, which may be installed in a host device. As shown, the processing system 800 includes a processor 804, a memory 806, and interfaces 810-814, which may (or may not) be arranged as shown in the figure. The processor 804 may be any component or collection of components adapted to perform computations and/or other processing related tasks, and the memory 806 may be any component or collection of components adapted to store programming and/or instructions for execution by the processor 804. In an embodiment, the memory 806 includes a non-transitory computer readable medium. The interfaces 810, 8i2, 814 may be any component or collection of components that allow the processing system 800 to communicate with other devices/components and/or a user. For example, one or more of the interfaces 810, 812, 814 may be adapted to communicate data, control, or management messages from the processor 804 to applications installed on the host device and/or a remote device. As another example, one or more of the interfaces 810, 812, 814 may be adapted to allow a user or user device (e.g., personal computer (PC), etc.) to interact/communicate with the processing system 800. The processing system 800 may include additional components not depicted in the figure, such as long term storage (e.g., non-volatile memory, etc.).

In some embodiments, the processing system 800 is included in a network device that is accessing, or part otherwise of, a telecommunications network. In one example, the processing system 800 is in a network-side device in a wireless or wireline telecommunications network, such as a base station, a relay station, a scheduler, a controller, a gateway, a router, an applications server, or any other device in the telecommunications network. In other embodiments, the processing system 800 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 810, 812, 814 connects the processing system 800 to a transceiver adapted to transmit and receive signaling over the telecommunications network. Figure 9 illustrates a block diagram of a transceiver 900 adapted to transmit and receive signaling over a telecommunications network. The transceiver 900 maybe installed in a host device. As shown, the transceiver 900 comprises a network-side interface 902, a coupler 904, a transmitter 906, a receiver 908, a signal processor 910, and a device-side interface 9712. The network-side interface 902 may include any component or collection of components adapted to transmit or receive signaling over a wireless or wireline telecommunications network. The coupler 904 may include any component or collection of components adapted to facilitate bi-directional communication over the network-side interface 902. The transmitter 906 may include any component or collection of components (e.g., up-converter, power amplifier, etc.) adapted to convert a baseband signal into a modulated carrier signal suitable for transmission over the network-side interface 902. The receiver 908 may include any component or collection of components (e.g., down-converter, low noise amplifier, etc.) adapted to convert a carrier signal received over the network-side interface 902 into a baseband signal. The signal processor 910 may include any component or collection of components adapted to convert a baseband signal into a data signal suitable for communication over the device-side interface(s) 912, or vice-versa. The device-side interface(s) 912 may include any component or collection of components adapted to communicate data-signals between the signal processor 910 and components within the host device (e.g., the processing system 800, local area network (LAN) ports, etc.).

The transceiver 900 may transmit and receive signaling over any type of communications medium. In some embodiments, the transceiver 900 transmits and receives signaling over a wireless medium. For example, the transceiver 900 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 902 comprises one or more antenna/radiating elements. For example, the network-side interface 902 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 900 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a detecting unit/module, an initiating unit/module, and/or a determining unit/module. The respective units/modules may be hardware, software, or a combination thereof. For instance, one or more of the units/modules may be an integrated circuit, such as FPGAs or ASICs.

## Claims

1. A method for operating a mobile phone comprising:
determining, by the mobile phone, by matching vibro-acoustic effects of at least one touch on a touch screen with a vibro-acoustic effects profile among a plurality of vibro-acoustic effects stored in the mobile phone, whether a single knuckle or a double knuckle was used to knock on the touch screen when the touch screen of the mobile phone is on and in any state (510, 520), wherein the knocks are made anywhere on the touch screen;
performing, by the mobile phone, no action if the touch screen was knocked on once by a single knuckle (530, 540);
capturing, by the mobile phone, a snapshot of the full screen if the screen was knocked on twice by a single knuckle (530, 550);
performing, by the mobile phone, no action if the touch screen was knocked on once by double (560, 540) knuckles;
launching, by the mobile phone, a unique feature (570) when it is determined that a double-knuckle double-knock has occurred within a specified period of time.

2. The method of claim 1, wherein the unique feature is screen recording.

3. The method of claim 1 or 2, wherein two touches on the touch screen are considered two uni-touches and the mobile phone performs no action if the time between the two knuckles knocking on the touch screen is not within 50 - 100 ms.

4. The method of any one of claims 1 to 3, wherein two touches on the touch screen are considered a multi-touch if the time between the two knuckles knocking on the touch screen is within 50 - 100 ms and the mobile phone launches the unique feature when the time between a first multi-touch knock and a second multi-touch knock is within 250 - 350 ms.

5. A mobile phone, arranged to:
determine, by the mobile phone, by matching vibro-acoustic effects of at least one touch on a touch screen with a vibro-acoustic effects profile among a plurality of vibro-acoustic effects stored in the mobile phone, whether a single knuckle or a double knuckle was used to knock on a touch screen when the touch screen of the mobile phone is on and in any state, wherein the knocks are made anywhere on the touch screen;
perform, by the mobile phone, no action if the touch screen was knocked on once by a single knuckle;
capture, by the mobile phone, a snapshot of the full screen if the screen was knocked on twice by a single knuckle;
perform, by the mobile phone, no action if the touch screen was knocked on once by double knuckles;
launch, by the mobile phone, a unique feature when it is determined that a double-knuckle double-knock has occurred within a specified period of time.

6. The mobile phone of claim 5, wherein the unique feature is screen recording.

7. The mobile phone of claim 5 or 6, wherein the mobile phone is further arranged to consider two touches on the touch screen to be two uni-touches and to perform no action if the time between the two knuckles knocking on the touch screen is not within 50 - 100 ms.

8. The mobile phone of any one of claims 5 to 7, wherein the mobile phone is further arranged to consider two touches on the touch screen to be a multi-touch if the time between the two knuckles knocking on the touch screen is within 50 - 100 ms and to launch the unique feature when the time between a first multi-touch knock and a second multi-touch is within 250 - 350 ms.

## Patentansprüche

1. Verfahren zum Betreiben eines Mobiltelefons, umfassend:
Bestimmen durch das Mobiltelefon durch Vergleichen von vibroakustischen Wirkungen mindestens einer Berührung auf einem Berührungsbildschirm mit einem Profil vibroakustischer Wirkungen unter einer Mehrzahl von vibroakustischen Wirkungen, die im Mobiltelefon gespeichert sind, ob ein einziger Knöchel oder zwei Knöchel zum Klopfen auf den Berührungsbildschirm verwendet wurden, wenn der Berührungsbildschirm des Mobiltelefons eingeschaltet und in einem beliebigen Zustand ist (510, 520), wobei das Klopfen an einer beliebigen Stelle auf dem Berührungsbildschirm durchgeführt wird;
Durchführen keiner Aktion durch das Mobiltelefon, wenn mit einem einzigen Knöchel einmal auf den Berührungsbildschirm geklopft wurde (530, 540);
Aufnehmen eines Schnappschusses des vollständigen Bildschirms durch das Mobiltelefon, wenn mit einem einzigen Knöchel zweimal auf den Berührungsbildschirm geklopft wurde (530, 550);
Durchführen keiner Aktion durch das Mobiltelefon, wenn mit zwei Knöcheln einmal auf den Berührungsbildschirm geklopft wurde (560, 540);
Starten eines einzigartigen Merkmals durch das Mobiltelefon (570), wenn bestimmt wird, dass zweimaliges Klopfen mit zwei Knöcheln innerhalb einer spezifizierten Zeitdauer stattfand.

2. Verfahren nach Anspruch 1, wobei das einzigartige Merkmal Bildschirmaufzeichnung ist.

3. Verfahren nach Anspruch 1 oder 2, wobei zwei Berührungen auf dem Berührungsbildschirm als zwei Einfachberührungen betrachtet werden und das Mobiltelefon keine Aktion durchführt, wenn die Zeit zwischen den zwei Knöcheln, die auf den Bildschirm klopfen, nicht innerhalb von 50 bis 100 ms liegt.

4. Verfahren nach einem der Ansprüche 1 bis 3, wobei zwei Berührungen auf dem Berührungsbildschirm als eine Mehrfachberührung betrachtet werden, wenn die Zeit zwischen den zwei Knöcheln, die auf den Bildschirm klopfen, innerhalb von 50 bis 100 ms liegt, und das Mobiltelefon das einzigartige Merkmal startet, wenn die Zeit zwischen einem ersten Mehrfachberührungsklopfen und einem zweiten Mehrfachberührungsklopfen innerhalb von 250 bis 350 ms liegt.

5. Mobiltelefon, ausgelegt zum:
Bestimmen durch das Mobiltelefon durch Vergleichen von vibroakustischen Wirkungen mindestens einer Berührung auf einem Berührungsbildschirm mit einem Profil vibroakustischer Wirkungen unter einer Mehrzahl von vibroakustischen Wirkungen, die im Mobiltelefon gespeichert sind, ob ein einziger Knöchel oder zwei Knöchel zum Klopfen auf einen Berührungsbildschirm verwendet wurden, wenn der Berührungsbildschirm des Mobiltelefons eingeschaltet und in einem beliebigen Zustand ist, wobei das Klopfen an einer beliebigen Stelle auf dem Berührungsbildschirm durchgeführt wird;
Durchführen keiner Aktion durch das Mobiltelefon, wenn mit einem einzigen Knöchel einmal auf den Berührungsbildschirm geklopft wurde;
Aufnehmen eines Schnappschusses des vollständigen Bildschirms durch das Mobiltelefon, wenn mit einem einzigen Knöchel zweimal auf den Berührungsbildschirm geklopft wurde;
Durchführen keiner Aktion durch das Mobiltelefon, wenn mit zwei Knöcheln einmal auf den Berührungsbildschirm geklopft wurde;
Starten eines einzigartigen Merkmals durch das Mobiltelefon, wenn bestimmt wird, dass zweimaliges Klopfen mit zwei Knöcheln innerhalb einer spezifizierten Zeitdauer stattfand.

6. Mobiltelefon nach Anspruch 5, wobei das einzigartige Merkmal Bildschirmaufzeichnung ist.

7. Mobiltelefon nach Anspruch 5 oder 6, wobei das Mobiltelefon ferner so ausgelegt ist, dass es zwei Berührungen auf dem Berührungsbildschirm als zwei Einfachberührungen betrachtet und keine Aktion durchführt, wenn die Zeit zwischen den zwei Knöcheln, die auf den Bildschirm klopfen, nicht innerhalb von 50 bis 100 ms liegt.

8. Mobiltelefon nach einem der Ansprüche 5 bis 7, wobei das Mobiltelefon ferner so ausgelegt ist, dass es zwei Berührungen auf dem Berührungsbildschirm als eine Mehrfachberührung betrachtet, wenn die Zeit zwischen den zwei Knöcheln, die auf den Bildschirm klopfen, innerhalb von 50 bis 100 ms liegt, und das einzigartige Merkmal startet, wenn die Zeit zwischen einem ersten Mehrfachberührungsklopfen und einem zweiten Mehrfachberührungsklopfen innerhalb von 250 bis 350 ms liegt.

## Revendications

1. Procédé de fonctionnement d'un téléphone mobile comprenant :
la détermination, par le téléphone mobile, par établissement d'une correspondance entre des effets vibro-acoustiques d'au moins une touche sur un écran tactile et un profil d'effets vibro-acoustiques parmi une pluralité d'effets vibro-acoustiques stockés dans le téléphone mobile, si une seule jointure ou une double jointure a été utilisée pour tapoter sur l'écran tactile quand l'écran tactile du téléphone mobile est allumé et dans n'importe quel état (510, 520), les tapotements étant réalisés n'importe où sur l'écran tactile ;
la réalisation, par le téléphone mobile, d'aucune action si l'écran tactile a été tapoté une fois par une seule jointure (530, 540) ;
la capture, par le téléphone mobile, d'un instantané de l'écran complet si l'écran a été tapoté deux fois par une seule jointure (530, 550) ;
la réalisation, par le téléphone mobile, d'aucune action si l'écran tactile a été tapoté une fois par une double jointure (560, 540) ;
le lancement, par le téléphone mobile, d'une fonctionnalité unique (570) lorsqu'il est déterminé qu'un double tapotement par une double jointure s'est produit dans un laps de temps spécifié.

2. Procédé de la revendication 1, dans lequel la fonctionnalité unique est une capture d'écran.

3. Procédé de la revendication 1 ou 2, dans lequel deux touches sur l'écran tactile sont considérées comme deux touches uniques et le téléphone mobile ne réalise aucune action si le temps entre le tapotement par les deux jointures sur l'écran tactile ne se situe pas dans les 50-100 ms.

4. Procédé de l'une quelconque des revendications 1 à 3, dans lequel deux touches sur l'écran tactile sont considérées comme une multitouche si le temps entre le tapotement par les deux jointures sur l'écran tactile se situe dans les 50-100 ms et le téléphone mobile lance la fonctionnalité unique quand le temps entre un premier tapotement multitouche et un deuxième tapotement multitouche se situe dans les 250-350 ms.

5. Téléphone mobile, agencé pour :
déterminer, par le téléphone mobile, par établissement d'une correspondance entre des effets vibro-acoustiques d'au moins une touche sur un écran tactile et un profil d'effets vibro-acoustiques parmi une pluralité d'effets vibro-acoustiques stockés dans le téléphone mobile, si une seule jointure ou une double jointure a été utilisée pour tapoter sur un écran tactile quand l'écran tactile du téléphone mobile est allumé et
dans n'importe quel état, les tapotements étant réalisés n'importe où sur l'écran tactile ;
ne réaliser, par le téléphone mobile, aucune action si l'écran tactile a été tapoté une fois par une seule jointure ;
capturer, par le téléphone mobile, un instantané de l'écran complet si l'écran a été tapoté deux fois par une seule jointure ;
ne réaliser, par le téléphone mobile, aucune action si l'écran tactile a été tapoté une fois par une double jointure ;
lancer, par le téléphone mobile, une fonctionnalité unique lorsqu'il est déterminé qu'un double tapotement par une double jointure s'est produit dans un laps de temps spécifié.

6. Téléphone mobile de la revendication 5, dans lequel la fonctionnalité unique est une capture d'écran.

7. Téléphone mobile de la revendication 5 ou 6, le téléphone mobile étant en outre agencé pour considérer deux touches sur l'écran tactile comme deux touches uniques et pour ne réaliser aucune action si le temps entre le tapotement par les deux jointures sur l'écran tactile ne se situe pas dans les 50-100 ms.

8. Téléphone mobile de l'une quelconque des revendications 5 à 7, le téléphone mobile étant en outre agencé pour considérer deux touches sur l'écran tactile comme une multitouche si le temps entre le tapotement par les deux jointures sur l'écran tactile se situe dans les 50-100 ms et pour lancer la fonctionnalité unique quand le temps entre un premier tapotement multitouche et un deuxième tapotement multitouche se situe dans les 250-350 ms.
